# FASCICULE DE BREVET EUROPEEN

(11) **EP 2 936 238 B1**
(45) Date de publication et mention de la délivrance du brevet: **19.01.2022**
(21) Numéro de dépôt: 13821844.1
(22) Date de dépôt: 16.12.2013
(51) Int. Cl.: G02B 27/01, G02B 27/00, H05B 3/84

(54) **AFFICHEUR, NOTAMMENT AFFICHEUR TÊTE HAUTE, POUR VÉHICULE**
ANZEIGE, INSBESONDERE EINE HEAD-UP-ANZEIGE, FÜR EIN FAHRZEUG
DISPLAY, IN PARTICULAR A HEAD-UP DISPLAY, FOR A VEHICLE

(30) Priorité: 20.12.2012 FR 1203544
(43) Date de publication de la demande: 28.10.2015
(73) Titulaire: Valeo Comfort and Driving Assistance, 94046 Créteil Cedex (FR)
(72) Inventeur: GELOEN, Richard, 94046 Créteil Cedex (FR)
(74) Mandataire: Pothmann, Karsten
(86) Numéro de dépôt international: PCT/FR2013/000340
(87) Numéro de publication internationale: WO 2014/096563

(56) Documents cités:
- EP-A1- 0 713 792
- EP-A1- 0 824 216
- EP-A1- 1 972 483

## Description

La présente invention concerne un afficheur, en particulier afficheur tête haute, pour un véhicule.

Si de tels systèmes d'affichage d'informations sont depuis de nombreuses années utilisés dans le domaine aéronautique pour permettre au pilote de visualiser simultanément, sans avoir à adapter sa vision, l'environnement extérieur et des informations fournies par les instruments de bord et s'affichant devant lui sur le cockpit, ils se développent maintenant de plus en plus dans le domaine automobile, contribuant à l'aide à la conduite du véhicule.

L'afficheur selon l'invention sera décrit ci-après en regard de son application à l'automobile, mais il va de soi qu'il pourrait être destiné à tout autre domaine de transport en général, dès l'instant où l'on a besoin d'un affichage d'informations dans le champ de vision de la personne concernée.

Généralement, un afficheur tête haute pour un véhicule comprend un dispositif de génération d'images, permettant de former l'image à projeter.

Comme ce dispositif avec son électronique de puissance associé engendre de la chaleur, l'afficheur comporte un moyen de refroidissement du dispositif, d'autant plus que ce dernier est souvent logé dans des endroits confinés, peu aérés, du véhicule, tels que sous la planche de bord de ce dernier.

Le système est par ailleurs complété par un ensemble de miroirs de réflexion du faisceau émis en sortie du dispositif, pour diriger les images qu'il transmet, jusqu'à un élément optique final permettant l'affichage d'une image virtuelle située dans le champ de vision des yeux du conducteur, au delà du pare-brise.

On sait que l'habitacle d'un véhicule est soumis à des variations notables de température et d'humidité (volontaires ou non) pouvant engendrer des phénomènes de condensation en formant notamment de la buée sur les vitres du véhicule et autres surfaces analogues comme les miroirs de réflexion de l'afficheur. Tel est ce qui se produit lorsque la température dite de rosée est atteinte. En effet, la condensation apparaît sur un matériau lorsque la température de l'air environnant devient inférieure à la température de rosée, laquelle dépend de l'humidité relative de l'air. Ainsi, si le point de rosée est franchi, il y a un risque que les éléments de la chaîne optique de l'afficheur (miroirs notamment) soient partiellement embués si bien que l'image transmise par le faisceau sera altérée, de moindre qualité, voire illisible, privant le conducteur des informations. Le document EP 0 713 792 A1 divulgue un afficheur tête haute comprenant des ailettes afin d'évacuer la chaleur émise par le dispositif de génération d'images. Le document EP 1 972 483 A1 divulgue un afficheur tête haute couplé au système de climatisation d'un véhicule. Le document EP 0 824 216 A1 divulgue un afficheur tête haute, comportant un ensemble permettant d'évacuer le flux de chaleur émis par le dispositif de génération d'images.

La présente invention a pour but d'apporter une solution au problème de condensation apparaissant sur les systèmes d'affichage tête haute.

À cet effet, l'invention concerne un afficheur, notamment tête haute, pour véhicule, ledit afficheur comportant :
- un dispositif de génération d'images, et
- un ensemble de réflexion d'un faisceau émis en sortie du dispositif de génération d'images.

Selon l'invention, ledit afficheur est configuré pour diriger un flux de chaleur, émise par ledit dispositif de génération d'images, vers l'ensemble de réflexion.

Ainsi, en établissant une circulation de chaleur appropriée, par convection naturelle et/ou forcée, on peut maintenir la température ambiante de l'ensemble de réflexion, au-dessus de la température de rosée, ce qui permet d'empêcher la formation de condensation sur les éléments de la chaîne optique de l'afficheur. En conséquence, le risque d'atteindre le point de rosée étant supprimé, l'image transmise et obtenue sur l'écran final (image représentative de l'information à afficher) est nette, de qualité optimale, sans contour flou ni perte partielle ou totale de l'image. Le système de l'invention s'affranchit donc du problème de condensation précité et ceci et se servant de chaleur dissipée par ses propres composants.

Selon différents modes de réalisation de l'invention qui pourront être pris ensemble ou séparément :
- ledit afficheur comprend en outre un moyen de récupération de la chaleur émise par le dispositif de génération d'images,
- le moyen de récupération comprend au moins un radiateur,
- ledit afficheur comprend un ventilateur associé au moyen de récupération pour forcer la chaleur récupérée en direction de l'ensemble de réflexion,
- ledit afficheur comprend en outre un moyen de refroidissement dudit dispositif de génération d'images,
- ledit moyen de récupération est configuré pour capter la chaleur émise par ledit dispositif sous la forme d'un flux de chaleur dissipée par le moyen de refroidissement,
- le moyen de récupération est rapporté au dispositif de projection d'images en étant adjacent au moyen de refroidissement,
- ledit radiateur est agencé pour absorber la chaleur dissipée par le moyen de refroidissement et la transférer en direction de l'ensemble de réflexion,
- ledit moyen de refroidissement est à effet Peltier, avec le moyen de récupération associé à la face chaude du moyen de refroidissement, la face froide de ce dernier étant en regard du dispositif de génération d'images,
- le dispositif de génération d'images comporte une source laser,
- la source laser du dispositif de génération d'images comporte des diodes laser formant un faisceau commun destiné à définir les images.

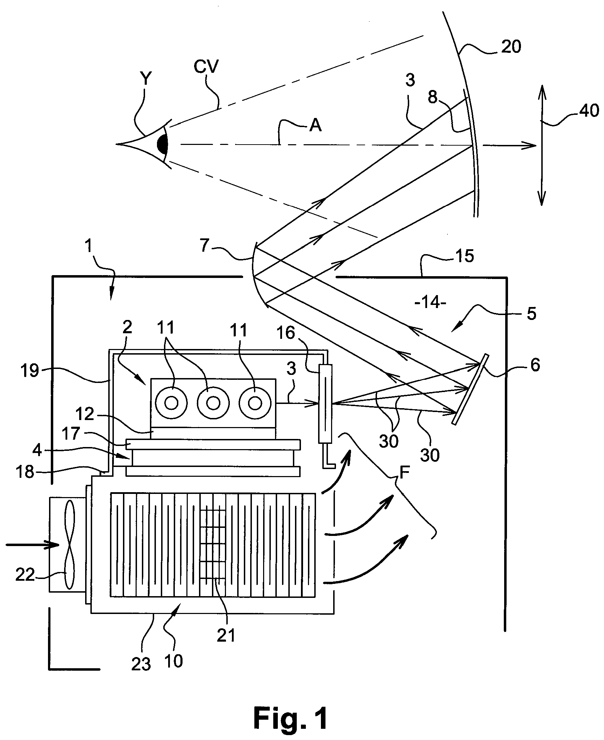

Un exemple de réalisation schématique de l'afficheur conforme à l'invention sera décrit ci-après en regard de la figure unique annexée.

Comme illustré sur la figure unique, l'invention concerne un afficheur 1, notamment afficheur tête haute, pour véhicule. Il permet l'affichage d'images virtuelles 40.

Dans une application préférentielle, quoique non exclusive, de l'invention, ledit afficheur 1 est destiné à être monté à bord d'un véhicule automobile pour afficher dans le champ de vision du conducteur CV, sensiblement dans l'axe de vision A des yeux de celui-ci, des informations spécifiques telles que la vitesse du véhicule, des indications du système de navigation, pannes, détections, etc.., et cela en évitant au conducteur de quitter la route des yeux pour regarder son tableau de bord ou l'écran du système de navigation.

L'afficheur 1 comprend usuellement un dispositif de génération d'images 2, émettant en sortie des rayons 30 destinés à projeter les images représentatives des informations à transmettre. Ledit dispositif comprend, par exemple, un projecteur à balayage muni d'une ou plusieurs sources 11 de lumière émettant chacune un faisceau du type laser. Il s'agit, par exemple, de sources laser, typiquement des diodes laser, chaque source laser émettant un faisceau monochromatique, c'est-à-dire consistant en une seule couleur.

Ledit dispositif pourra typiquement comprendre trois sources 11, ledit dispositif étant configuré pour former un faisceau lumineux à l'aide d'une mise en commun par combinaison des faisceaux individuellement émis par chacune desdits sources 11. Plus précisément, il pourra s'agir de sources émettant un faisceau d'une couleur différente d'une source à l'autre. Les couleurs sont, par exemple, un rouge, un vert ou un bleu (RVB).

La puissance optique de chacune des sources est pilotée, de manière indépendante, à l'aide du courant d'alimentation de la ou des sources laser. A puissance optique donnée, la couleur du faisceau lumineux est déterminée par la manière dont un ratio de puissance est établi entre les différentes diodes laser. Par exemple, pour obtenir une lumière blanche, les puissances optiques, en proportion, doivent être établies selon la distribution suivante : 60 pour la diode verte, 30 pour la diode bleue, 10 pour la diode rouge. La puissance optique de chacune des sources pourra également être pilotée pour moduler la puissance optique du faisceau lumineux.

Les faisceaux émis par chacune des sources sont orientés, par exemple, parallèlement les uns aux autres et réfléchit dans une même direction pour former par combinaison le faisceau lumineux commun. Ledit dispositif comprend en ce sens des éléments optiques semi-transparent, sur une plage de longueur d'onde, tels que des miroirs dichroïque ou lames de combinaison, interceptant les faisceaux émis par chacune desdites sources et les combinant selon la direction dudit faisceau.

De façon plus générale, ledit dispositif est configuré pour former ledit faisceau lumineux à partir du ou desdits faisceaux laser, quel que soit le nombre de sources en jeux. En cas de source unique, le faisceau lumineux est composé du faisceau laser émis par la seule source employée et l'image obtenue sera alors monochrome, composée des différents niveaux de puissances optiques appliquées à chacun des points qui la compose, selon un dégradé de ladite couleur. En cas de pluralité de sources, typiquement les trois sources évoquées plus haut, ledit faisceau commun qui forme alors ledit faisceau lumineux permettra l'établissement d'une image selon un spectre de couleur dont la résolution correspondra à la finesse de pilotage de l'alimentation desdites sources.

Ledit dispositif pourra en outre comprendre des moyens de pilotage de l'alimentation en courant desdites sources. Comme évoqué plus haut, ils pourront permettre un choix de la couleur du faisceau lumineux.

Ledit projecteur à balayage comprend en outre, par exemple, un générateur de balayage dont la fonction est de déplacer horizontalement et verticalement le faisceau lumineux émis par la ou les sources lumineuses en vue de réaliser un balayage selon une fréquence, notamment égale à 60 Hz, à titre d'exemple non limitatif. Le générateur de balayage comprend, notamment, un miroir à balayage à système micro-électro-mécanique (ci-après appelé miroir MEMS) sur lequel le faisceau lumineux émis par la ou les sources lumineuses se réfléchit en un faisceau de balayage 3. Un tel miroir MEMS présente par exemple un diamètre de 1 mm². Le miroir MEMS est apte à tourner autour de deux axes de rotation pour réaliser un balayage, par exemple à la fréquence de rafraîchissement de 60 Hz, d'un écran diffuseur 16 dudit dispositif. Ladite image se forme alors sur ledit diffuseur 16. Alternativement, le miroir MEMS peut être remplacé par deux miroirs plans et déplaçables, dont les mouvements sont associés. L'un de ces miroirs peut être dédié à un balayage selon un axe horizontal alors que l'autre miroir peut être dédié à un balayage selon un axe vertical.

Le diffuseur 16 où se forme l'image pourra être un écran de projection transparent à structure complexe pour une projection par transparence. Il pourra alternativement être translucide. Il est réalisé, par exemple, en verre, notamment dépoli, ou en polycarbonate. A titre d'exemple, l'écran diffuseur 16 est du type à pupille de sortie (« Exit Pupil Expander »). Il permet de disposer d'un cône d'observation élargi. Il s'étend dans un plan traversé par le faisceau lumineux, l'image résultant de ce faisceau de balayage 3 étant formée dans le plan d'une face de l'écran diffuseur 16.

Cet écran diffuseur reçoit le faisceau de balayage 3. Il est agencé pour provoquer une dispersion de ce faisceau de balayage 3 selon un secteur angulaire, par exemple, égal à 30° par rapport à la direction du faisceau de balayage 3 au moment où il vient frapper l'écran diffuseur 16. Pour ce faire, selon un exemple non limitatif, une face de l'écran diffuseur est rugueuse, en ce sens qu'elle comporte des aspérités qui provoquent la dispersion du faisceau de balayage. La face rugueuse correspond à celle par laquelle le faisceau sort, c'est-à-dire la face sur laquelle l'image se forme.

Selon une variante de réalisation, ledit dispositif d'affichage pourra être un écran, notamment un écran du type TFT.

En aval de l'écran diffuseur 16 selon le sens de déplacement du faisceau lumineux, ledit afficheur comprend au moins une lame semi-réfléchissante 20 et un ensemble de réflexion 5 interposé sur le trajet de l'image entre l'écran diffuseur 16 et la lame semi-réfléchissante 20. Ledit ensemble 5 de réflexion comprend ici des miroirs 6, 7 (au nombre de deux par exemple) recevant les rayons 3 délivrés en sortie du dispositif 2, pour la projection de ladite image 40. Sur cette figure, le trajet de l'image est symbolisé par des flèches qui se réfléchissent sur le dispositif de réflexion 5 avant de s'afficher à travers la lame semi-réfléchissante 20. Cette dernière permet un grossissement et/ou, par transparence, un affichage de l'image 40 au-delà de ladite lame semi-réfléchissante, notamment au-delà du pare-brise du véhicule équipé, au niveau d'un écran virtuel, obtenu à l'aide de ladite lame semi-réfléchissante 20.

Cette lame transparente présente un pouvoir de réflexion au moins égale à 20%, ce qui permet à l'utilisateur de voir au travers de la lame la route empruntée par le véhicule, tout en bénéficiant d'un contraste élevé permettant de voir l'image affichée. De manière alternative, l'affichage de l'image peut être réalisé par l'intermédiaire du pare-brise du véhicule équipé dudit afficheur.

Un tel afficheur, en particulier ledit dispositif de formation d'images 2, émet de la chaleur qu'il convient de dissiper, d'autant plus qu'il est souvent situé dans des zones confinées du véhicule sans aération importante, comme dans un logement de réception 14 ménagé dans le tableau de bord. La chaleur à dissiper provient plus précisément, par exemple, du projecteur à balayage, notamment de son électronique de commande, cette dernière comprenant, de façon optionnelle, les moyens de pilotage de l'alimentation en courant des sources 11.

Selon l'invention, ledit afficheur est configuré pour diriger un flux de chaleur, émise par ledit dispositif de génération d'images 2, vers l'ensemble 5 de réflexion, comme illustré par les flèches repérées F. On éviter de la sorte l'apparition de condensation sur la chaîne optique du système, en particulier, les miroirs.

Plus précisément, ici, ledit dispositif de formation d'images 2 comprend en outre un moyen de refroidissement 4 et/ou un moyen de récupération 10 de la chaleur dissipée par le moyen de refroidissement 4 pour diriger celle-ci vers l'ensemble 5 de miroirs 6, 7.

Le moyen de refroidissement 4 du dispositif de génération d'images est par exemple à effet Peltier. Sans entrer dans le détail de celui-ci, bien connu en soi (utilisation de matériaux conducteurs de nature différente liés par des jonctions formant contact, créant une différence de température), la cellule à effet Peltier est d'un côté ou face 17 de ce dernier, tourné vers l'électronique de puissance 12, en absorbant la chaleur (calories) émise par le dispositif 2, tandis que son autre côté ou face opposé 18, distant du dispositif, évacue la chaleur.

On remarque, par ailleurs, que le dispositif 2 et le moyen de refroidissement 4 sont logés dans un boîtier 19 reçu fixement dans le logement 14.

Le moyen de récupération 10 de la chaleur issue du dispositif 2 et dégagée par le moyen 4 comprend ici un radiateur 21 en contact thermique du côté 18 du moyen de refroidissement 4 pour ainsi absorber les calories évacuées par la cellule à effet Peltier. Le radiateur 21 transfère les calories en direction de l'ensemble 5 de miroirs 6, 7.

Aussi, pour optimiser un tel transfert thermique à l'intérieur du logement 14 vers l'ensemble 5, un ventilateur 22 est agencé en regard d'un côté du radiateur 21, en étant fixé à un support 23 du radiateur 21, lequel support peut être rapport sur le boîtier 19 ou faire partie de celui-ci. Ce ventilateur 22 engendre le flux d'air F le long du radiateur, par exemple à ailettes, lequel flux s'évacue par l'autre côté du radiateur, en direction de l'ensemble 5, comme le montrent les flèches F.

On obtient ainsi un chauffage par convection forcée des miroirs. Le flux de chaleur ainsi engendré s'évacue ensuite vers l'habitacle par des ouvertures non visibles sur la figure prévues dans le tableau de bord.

Grâce à l'invention, on maintient la température ambiante du système au-dessus de la température de rosée, ce qui permet d'empêcher la formation de condensation sur les éléments constituant la chaîne optique du système, et d'obtenir un affichage clair et net des informations transmises devant les yeux du conducteur au niveau du pare-brise, sur celui-ci ou par des images virtuelles projetées extérieurement à celui-ci selon le dispositif de générations d'images en présence dans le système.

Dans une variante de réalisation non représentée, on pourrait envisager, non plus une convection forcé, mais une convection naturelle (sans ventilateur), avec les ailettes du radiateur de façon que le flux d'air chaud balayant les ailettes soit dirigé vers les miroirs en tenant compte de leur positionnement relatif.

## Revendications

1. Afficheur, notamment afficheur tête haute, pour véhicule, ledit afficheur comportant :
- un dispositif de génération d'images (2), et
- un ensemble de réflexion (5) comprenant au moins un miroir de réflexion (6, 7) du faisceau émis en sortie du dispositif de génération d'images (2) pour diriger les images qu'il transmet jusqu'à un élément optique final (20) permettant l'affichage d'une image virtuelle située dans le champ de vision des yeux d'un conducteur au-delà d'un pare-brise,
**caractérisé par le fait que** ledit afficheur est configuré pour diriger un flux de chaleur, émise par ledit dispositif de génération d'images (2), vers l'ensemble (5) de réflexion.

2. Afficheur selon la revendication 1 comprenant en outre un moyen de récupération (10) de la chaleur émise par le dispositif de génération d'images (2).

3. Afficheur selon la revendication 2 comprenant en outre un moyen de refroidissement (4) dudit dispositif de génération d'images (2).

4. Afficheur selon la revendication 3 dans lequel ledit moyen de récupération (10) est configuré pour capter la chaleur émise par ledit dispositif sous la forme d'un flux de chaleur dissipée par le moyen de refroidissement (4).

5. Afficheur selon l'une des revendications 3 ou 4, dans lequel le moyen de récupération (10) est rapporté au dispositif de génération d'images (2) en étant adjacent au moyen de refroidissement (4).

6. Afficheur selon l'une des revendications 3 à 5, dans lequel le moyen de récupération (10) comprend au moins un radiateur (21) agencé pour absorber la chaleur dissipée par le moyen de refroidissement (4) et la transférer en direction de l'ensemble (5) de réflexion.

7. Afficheur selon l'une des revendications 3 à 6, comprenant un ventilateur (22) associé au moyen de récupération (10) pour forcer la chaleur récupérée en direction de l'ensemble (5) de réflexion.

8. Afficheur selon l'une des revendications 3 à 7, dans lequel le moyen de refroidissement (4) est à effet Peltier, avec le moyen de récupération associé à la face chaude (17) du moyen de refroidissement, la face froide (18) de ce dernier étant en regard du dispositif de génération d'images (2).

9. Afficheur selon l'une quelconque des revendications précédentes, dans lequel le dispositif de génération d'images (2) comporte une source laser.

10. Afficheur selon la revendication 9, dans lequel la source laser du dispositif de génération d'images (2) comporte des diodes laser formant un faisceau commun (3) destiné à définir les images.

## Patentansprüche

1. Display, insbesondere Head-up-Display, für ein Fahrzeug, wobei das Display aufweist:
- eine Bilderzeugungsvorrichtung (2) und
- eine Reflexionsanordnung (5), die mindestens einen Reflexionsspiegel (6, 7) zur Reflexion des aus der Bilderzeugungsvorrichtung (2) austretenden ausgesendeten Strahls umfasst, um die von ihr übertragenen Bilder zu einem finalen optischen Element (20) zu leiten, das die Anzeige eines virtuellen Bildes ermöglicht, das im Sichtfeld der Augen eines Fahrers jenseits einer Windschutzscheibe gelegen ist,
**dadurch gekennzeichnet, dass** das Display dazu ausgestaltet ist, einen Strom von Wärme, die von der Bilderzeugungsvorrichtung (2) ausgesendet wird, zur Reflexionsanordnung (5) zu leiten.

2. Display nach Anspruch 1, umfassend ferner ein Rückgewinnungsmittel (10) zur Rückgewinnung der von der Bilderzeugungsvorrichtung (2) ausgesendeten Wärme.

3. Display nach Anspruch 2, umfassend ferner ein Kühlmittel (4) zur Kühlung der Bilderzeugungsvorrichtung (2) .

4. Display nach Anspruch 3, bei dem das Rückgewinnungsmittel (10) dazu ausgestaltet ist, die von der Vorrichtung ausgesendete Wärme in Form eines Stroms von Wärme, die vom Kühlmittel (4) abgeführt wird, aufzufangen.

5. Display nach einem der Ansprüche 3 oder 4, bei dem das Rückgewinnungsmittel (10) an die Bilderzeugungsvorrichtung (2) angesetzt ist und dabei benachbart zum Kühlmittel (4) ist.

6. Display nach einem der Ansprüche 3 bis 5, bei dem das Rückgewinnungsmittel (10) mindestens einen Kühlkörper (21) umfasst, der dazu eingerichtet ist, die vom Kühlmittel (4) abgeführte Wärme zu absorbieren und sie in Richtung der Reflexionsanordnung (5) zu übertragen.

7. Display nach einem der Ansprüche 3 bis 6, umfassend ein Gebläse (22), das dem Rückgewinnungsmittel (10) zugeordnet ist, um die rückgewonnene Wärme in Richtung der Reflexionsanordnung (5) zu zwingen.

8. Display nach einem der Ansprüche 3 bis 7, bei dem das Kühlmittel (4) auf dem Peltier-Effekt basiert, wobei das Rückgewinnungsmittel der warmen Seite (17) des Kühlmittels zugeordnet ist, wobei dessen kalte Seite (18) der Bilderzeugungsvorrichtung (2) zugewandt ist.

9. Display nach einem der vorhergehenden Ansprüche, bei dem die Bilderzeugungsvorrichtung (2) eine Laserquelle aufweist.

10. Display nach Anspruch 9, bei dem die Laserquelle der Bilderzeugungsvorrichtung (2) Laserdioden aufweist, die einen gemeinsamen Strahl (3) bilden, der dazu bestimmt ist, die Bilder zu definieren.

## Claims

1. Display, in particular head-up display, for a vehicle, said display comprising:
- an image generation device (2) and
- a reflection assembly (5) comprising at least one reflection mirror (6, 7) for reflecting the beam emitted at the output of the image generation device (2) so as to direct the images that it transmits to a final optical element (20) for displaying a virtual image located in the field of view of the eyes of a driver beyond a windscreen,
**characterized in that** said display is configured so as to direct a flow of heat, emitted by said image generation device (2), to the reflection assembly (5).

2. Display according to Claim 1, furthermore comprising a recovery means (10) for recovering the heat emitted by the image generation device (2).

3. Display according to Claim 2, furthermore comprising a cooling means (4) for cooling said image generation device (2).

4. Display according to Claim 3, wherein said recovery means (10) is configured so as to capture the heat emitted by said device in the form of a flow of heat dissipated by the cooling means (4).

5. Display according to either of Claims 3 and 4, wherein the recovery means (10) is attached to the image generation device (2) while being adjacent to the cooling means (4).

6. Display according to one of Claims 3 to 5, wherein the recovery means (10) comprises at least one radiator (21) designed to absorb the heat dissipated by the cooling means (4) and transfer it in the direction of the reflection assembly (5).

7. Display according to one of Claims 3 to 6, comprising a blower (22) associated with the recovery means (10) for forcing the recovered heat in the direction of the reflection assembly (5).

8. Display according to one of Claims 3 to 7, wherein the cooling means (4) is a Peltier effect cooling means, with the recovery means associated with the hot face (17) of the cooling means, the cold face (18) thereof facing the image generation device (2).

9. Display according to any one of the preceding claims, wherein the image generation device (2) comprises a laser source.

10. Display according to Claim 9, wherein the laser source of the image generation device (2) comprises laser diodes forming a common beam (3) intended to define the images.
